# FASCICULE DE BREVET EUROPEEN

(11) **EP 4 139 119 B1**
(45) Date de publication et mention de la délivrance du brevet: **20.03.2024**
(21) Numéro de dépôt: 21731553.0
(22) Date de dépôt: 26.04.2021
(51) Int. Cl.: B29C 70/54, A43B 17/00, B29C 51/14, B29C 70/68, B29C 70/78, B29C 70/84, B29C 70/88, B29D 35/14, B32B 1/08, B32B 3/06, B29C 59/18, B29C 65/70, B29C 37/00, B33Y 10/00, B29C 45/14, B29C 45/16, B29L 31/46, B29L 31/50, B29C 61/06

(54) **DISPOSITIF THERMOFORMABLE ET A MEMOIRE DE FORME ET APPLICATIONS**
THERMOFORMBARE FORMGEDÄCHTNISVORRICHTUNG UND VERWENDUNGEN DAVON
THERMOFORMABLE SHAPE-MEMORY DEVICE AND USES THEREOF

(30) Priorité: 06.05.2020 FR 2004508
(43) Date de publication de la demande: 01.03.2023
(73) Titulaire: Millet Innovation, 26270 Loriol sur Drome (FR)
(72) Inventeur: LAURENT, Hugo, 26200 MONTELIMAR (FR); ANKAOUA, Clément, 38000 Grenoble (FR); TREPIER-LE BELLER, Maria Luisa, 26800 ETOILES SUR RHONE (FR)
(74) Mandataire: Marchand, André
(86) Numéro de dépôt international: PCT/FR2021/050719
(87) Numéro de publication internationale: WO 2021/224562

(56) Documents cités:
- EP-A2- 0 498 602
- US-A- 5 330 815
- US-A1- 2015 093 559
- US-A1- 2015 335 460
- US-A1- 2016 150 835

## Description

La présente invention concerne un dispositif présentant une forme initiale pouvant être modifiée durablement s'il est soumis à une certaine plage de température et capable de retrouver sa forme initiale s'il est exposé sans contrainte à cette température. La présente invention s'applique notamment aux dispositifs destinés à être appliqués contre le corps humain et/ou animal, telles que les semelles, chaussons, chaussures, attelles, corsets, minerves, poignées et manches à usage sportif ou présents dans des outils à main, selles, assises, dossiers, sacs à dos, équipements de protection (plastrons, casques, épaulettes, coudières, genouillères, protections dorsales, gilets de protection, ...).

Chaque individu présente une morphologie unique qui lui est propre. Par conséquent, une interface entre le corps d'un individu et un objet ne peut être parfaitement optimisée pour certaines applications, que si cette interface épouse la forme du corps avec laquelle elle est en contact.

L'utilisation de tissus souples et/ou extensibles permet une adaptation optimale à la surface d'un corps, moyennant l'utilisation d'un patronage adéquat. Néanmoins, dans certaines applications de santé, d'habillement, de protection ou de confort, il est nécessaire, pour des raisons de fonction mécanique, de mettre en contact avec la surface d'un corps un objet plus ou moins rigide. Les objets concernés par ces applications ne peuvent donc pas être réalisés uniquement en tissu ou équivalent. Par exemple, un dispositif de maintien d'une articulation doit offrir des caractéristiques de résistance mécanique suffisantes pour réaliser sa fonction de maintien, tout en possédant au moins deux zones d'appui sur le corps de part et d'autre de l'articulation visée. Autre exemple, les dispositifs de protection d'une zone du corps doivent offrir des caractéristiques mécaniques de dureté et une épaisseur suffisante, tout en épousant la surface du corps concernée.

Or, les dispositifs répondant à ces applications sont, encore aujourd'hui, principalement fabriqués en série et ne sont donc déclinés qu'en un nombre limité de tailles correspondant à des formes et dimensions différentes, ne dépassant que très rarement une dizaine de tailles pour un même dispositif. La catégorie des dispositifs fabriqués en série présente l'avantage d'être relativement simple et peu onéreuse à fabriquer, ce qui explique sa présence très majoritaire. Bien que ces dispositifs, pour la plupart, essayent de reproduire les formes générales des surfaces du corps avec lesquelles ils vont être en contact, ils ne s'adaptent jamais parfaitement au corps de leur utilisateur.

Une autre catégorie de dispositifs répondant à ces applications, regroupe les dispositifs fabriqués "sur mesure", c'est-à-dire, fabriqués en fonction et en présence de la surface du corps de l'utilisateur final, ce qui permet d'obtenir une correspondance bien plus précise entre la forme du dispositif et la morphologie de l'utilisateur. Néanmoins, ces produits faits sur mesure sont généralement plus complexes et plus coûteux à fabriquer en interdisant les économies résultant des fabrications en série. De plus, la prise de mesure au préalable, sur le corps de l'utilisateur à qui est destiné le dispositif, nécessite un investissement en temps par l'utilisateur avant même que la fabrication n'ait pu commencer. Même si les nouvelles technologies numériques, impression 3D et imagerie 3D notamment, tendent à diminuer l'importance de ces problèmes par une automatisation de la fabrication d'un modèle numérique unique basé sur des données anatomiques 3D, elles-mêmes recueillies dans des fichiers numériques constitués par le futur utilisateur, il n'en reste pas moins qu'un dispositif réalisé sur mesure ne pourra s'adapter que sur le corps pour lequel il a été fabriqué et sera donc fatalement inadapté à un autre utilisateur. Les dispositifs de cette catégorie sont donc utilisables seulement tant que l'utilisateur en a besoin, ce qui ne contribue pas à la diminution des déchets et de la consommation des ressources de la planète.

Une autre catégorie minoritaire de dispositifs répondant à ces mêmes applications se base sur l'utilisation de matériaux solides modelables, c'est-à-dire présentant la propriété de pouvoir changer de forme par la chaleur (thermoformables) ou d'adopter une forme solide à partir d'une forme liquide ou en poudre. Les matériaux solides thermoformables présentent généralement une forme de plaque plane en un matériau unique ou complexé avec d'autres matériaux sensibles aux mêmes plages de température. L'application d'une certaine température permet de déformer la plaque en l'appliquant sur la zone du corps visée. Cette opération de thermoformage est généralement réalisée par un professionnel, ou par l'utilisateur lui-même dans certaines applications. Les matériaux liquides ou en poudre nécessitent généralement l'ajout d'au moins un autre composant pour déclencher une réaction chimique entrainant la solidification du matériau. Pendant la durée de la réaction chimique, il est possible de donner une forme au matériau et donc de l'adapter à la forme de la zone du corps visée. Ces deux types de matériaux permettent d'obtenir un dispositif unique parfaitement adapté à la forme d'une zone du corps d'un utilisateur, à partir d'un matériau fabriqué en série. Néanmoins, la réalisation de ce type de dispositif, bien que relativement rapide, peut être très délicate et l'intervention d'un professionnel est souvent nécessaire pour minimiser le risque d'erreur. De plus, le dispositif ainsi réalisé n'est généralement pas réversible, c'est-à-dire qu'il est impossible de le ramener à sa forme initiale et donc de corriger une erreur de moulage ou de le réutiliser pour un autre utilisateur. Ces dispositifs présentent donc le même défaut que ceux réalisés sur mesure en étant à "utilisateur unique", en plus d'être difficile à utiliser, compte tenu de l'étape de réalisation de la forme sans marge d'erreur.

Les dispositifs existants, comportant une interface en contact avec une zone du corps d'un utilisateur, sont donc soit imparfaitement adaptés à cette zone, soit complexes à mettre en oeuvre en plus d'être à "utilisateur unique".

Récemment, des matériaux composites thermoformables et à mémoire de forme ont été développés. Ces matériaux à base de polymères sont facilement modelables dans une certaine plage de températures et présentent la capacité de revenir à leur forme originale dans même cette plage de température en l'absence de contraintes mécaniques. A cet effet, ces matériaux intègrent deux types de fibres, à savoir des fibres ayant une température de transition vitreuse dans la plage de température de thermoformage souhaitée, et des fibres ayant une température de transition vitreuse significativement plus élevée que la plage de température de thermoformage souhaitée. Ainsi un matériau thermoformable et à mémoire de forme permettrait de réaliser un objet modelable à la morphologie du corps de l'utilisateur, tout en étant capable de revenir à sa forme avant modelage. Certains fabricants proposent des matériaux de ce type pour la fabrication en série d'objets par injection plastique. Néanmoins, les matériaux de ce type disponibles dans le commerce couvrent un spectre limité de caractéristiques mécaniques et présentent un coût notablement plus élevé que la plupart des matériaux utilisés en injection plastique. En effet, ces matériaux présentent soit une rigidité insuffisante pour assurer un maintien suffisant d'une articulation du corps humain, soit un coût excessif, soit leur température de modelage est excessive permettre un modelage par application du matériau sur la zone du corps à maintenir sans risque de brûlure de l'utilisateur. Le module de flexion minimum pour apporter un maintien suffisant tout en utilisant des stratégies mécaniques permettant de rigidifier un objet par sa forme (notamment par exploitation du moment quadratique) peut être évalué entre 1 et 2 GPa selon la taille et les forces qui s'appliquent à l'articulation ou la partie du corps à supporter.

Il est également connu d'appliquer des matériaux viscoélastiques sur une zone du corps d'un utilisateur pour amortir les chocs et/ou répartir la pression. Cependant, les matériaux viscoélastiques ne sont généralement pas modelables à des températures inférieures à 100°C et sont insuffisamment rigides pour assurer le maintien d'une articulation ou supporte une partie du corps.

Il peut donc être souhaitable de prévoir un dispositif comportant une interface pouvant être adaptée d'une manière réversible à la forme d'une zone d'un corps humain ou animal, et pouvant être fabriqué en série. Dans le cadre d'applications d'interface avec une zone du corps humain ou animal, il peut également être souhaitable que le dispositif ait des propriétés d'amortissement de chocs et de répartition de pression.
Le document US 2015/093559 décrit un matériau composite à mémoire de forme, formé de deux couches coextrudées en matériaux polymères différents et ayant des températures de fusion ou de transition vitreuse différentes, la première couche dure capable de passer d'une forme temporaire à une forme permanente, la seconde couche souple définissant un élément de commutation conférant au matériau à mémoire de forme une forme temporaire, le matériau composite à mémoire de forme étant capable de supporter une transition induite par la température, de la forme temporaire à la forme permanente.
Le document US 5 330 815 décrit une enveloppe composite rétractable à la chaleur comprenant deux premières couches et une couche de renfort renfermant des fibres entre les deux premières couches. L'une des premières couches comprend un matériau rétractable à la chaleur. La structure est étirée durant une opération de réticulation à chaud avant refroidissement et conserve sa forme étirée.
Le document US 2015/335460 décrit une plaquette et une bande ajustable pour envelopper le pied. La plaquette peut comprendre un polymère malléable à la chaleur ou à mémoire de forme, un matériau de base en plastique semi-rigide qui peut être malléable à la chaleur. La plaquette peut également comprendre une structure composite incluant une base support recouverte d'une couche externe en un matériau flexible et souple qui peut être un gel de silicone. La couche externe peut également inclure une garniture ou un revêtement en un matériau malléable à la chaleur ou à mémoire de forme.

Des modes de réalisation concernent un procédé de fabrication d'un dispositif thermoformable à mémoire de forme selon la revendication 1.

Des modes de réalisation peuvent également concerner un dispositif selon la revendication 5.

Des exemples de réalisation de l'invention seront décrits dans ce qui suit, à titre non limitatif en relation avec les figures jointes parmi lesquelles :
[Fig. 1] les figures 1A, 1B sont des vues schématiques respectivement de dessus et en coupe selon un plan de coupe AA montré sur la figure 1A, d'une plaquette en matériau composite, selon un mode de réalisation,
[Fig. 2] les figures 2A, 2B sont des vues schématiques respectivement de dessus et en coupe selon un plan de coupe BB montré sur la figure 2A, d'une plaquette en matériau composite, selon un autre mode de réalisation,
[Fig. 3] les figures 3A, 3B sont des vues schématiques respectivement de dessus et en coupe selon un plan de coupe CC montré sur la figure 3A, d'une plaquette en matériau composite, selon un autre mode de réalisation,
[Fig. 4] la figure 4 est une vue en coupe d'une plaquette en matériau composite, selon un autre mode de réalisation,
[Fig. 5] la figure 5 est une vue en perspective d'une partie d'un manche réalisé dans un matériau composite selon un mode de réalisation,
[Fig. 6] la figure 6 est une vue en perspective d'une partie d'un manche réalisé dans un matériau composite selon un autre mode de réalisation,
[Fig. 7] la figure 7 est une vue en perspective d'une semelle en un matériau composite selon un mode de réalisation.

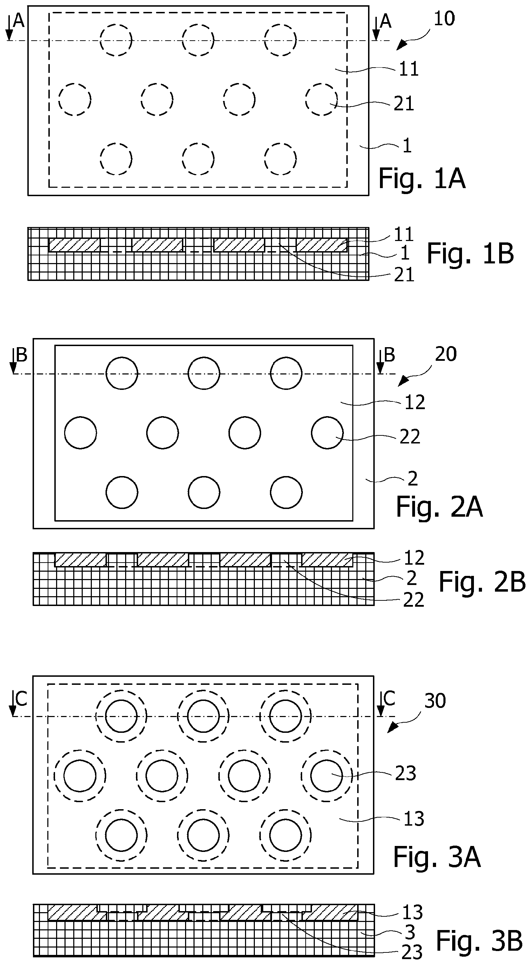

Les figures 1A, 1B représentent une plaquette 10 en un matériau composite, selon un mode de réalisation. La plaquette 10 comprend une couche 1 en un matériau viscoélastique dans laquelle est noyée une couche 11 en un matériau thermoformable. La couche 1 est déformable élastiquement dans une plage de températures incluant une plage de températures d'utilisation de la plaquette 10, et une plage de températures de thermoformage de la couche 11, excédant une température de transition vitreuse de la couche 11 et dans laquelle la couche 11 est déformable non élastiquement, la plage de températures d'utilisation étant inférieure à la plage de températures de thermoformage. Par ailleurs, dans la plage de températures d'utilisation, le matériau de la couche thermoformable 11 est plus rigide que le matériau viscoélastique de la couche 1, et dans la plage de températures de thermoformage, le matériau de la couche thermoformable 11 est moins rigide que le matériau viscoélastique de la couche 1.

Ainsi, dans la plage de températures d'utilisation, la forme de la plaquette 10 est donnée par la forme de la couche thermoformable 11 plus rigide que la couche viscoélastique 1. Grâce à la présence de la couche thermoformable 11, la plaquette 10 peut être déformée non élastiquement après avoir été chauffée à une température située dans la plage de température de thermoformage, la couche 1 s'écrasant et/ou se déformant élastiquement. Si l'on maintient cette déformation pendant que la plaquette 10 se refroidit jusqu'à atteindre une température dans la plage de températures d'utilisation, la couche 11 garde sa forme et devient plus rigide, en contraignant la couche 1. La couche 11 définit alors la forme de la plaquette 10. Si l'on chauffe la plaquette 10 à une température dans la plage de thermoformage sans exercer de contraintes sur sa surface, la couche 1 alors plus rigide, et déformée élastiquement, repousse la couche 11 pour reprendre sa forme initiale, cette forme étant conservée lorsque la plaquette retourne à une température dans la plage de températures d'utilisation. Il en résulte que le matériau composite constitué des couches 1 et 11 présente les propriétés d'être à la fois thermoformable et à mémoire de forme.

Il peut être observé qu'au contraire, la plupart des matériaux thermoformables ne sont pas à mémoire de forme, de sorte qu'en l'absence de force externe, une couche en matériau thermoformable ne reprend pas naturellement une forme initiale à une température de thermoformage.

Dans l'exemple des figures 1A, 1B, la couche 11 présente des orifices traversants 22 répartis à sa surface, remplis par le matériau de la couche 1 afin d'assurer une cohésion mécanique entre les couches 1 et 11 sur toute la surface de contact entre les couches 1, 11.

Selon un mode de réalisation, la plage de températures de thermoformage est telle que dans cette plage, la couche 11 peut être déformée à la main sans risque de brûlure. La plage de températures de thermoformage peut ainsi être située entre 50 et 100°C. Par exemple, la température de transition vitreuse de la couche 11 est située entre 50 et 80°C, et la température de transition vitreuse de la couche 1 (limite haute de la plage de températures de déformation élastique de la couche 1) est supérieure à la plage de températures de thermoformage, et par exemple supérieure à 110°C.

Les figures 2A, 2B représentent une plaquette 20 en un matériau composite thermoformable et à mémoire de forme, selon un autre mode de réalisation. La plaquette 20 comprend une couche 2 dans le même matériau viscoélastique que la couche 1, et une couche 12 dans le même matériau thermoformable que la couche 11. La plaquette 20 diffère de la plaquette 10 en ce que la couche 12 est disposée à la surface de la couche 2.

Les couches 2 et 12 sont liées entre elles chimiquement. La liaison chimique entre les deux matériaux est par exemple réalisée par un mélange des matériaux formant les couches 2, 12 sur une faible épaisseur de part et d'autre de l'interface entre ces deux couches. Cette liaison chimique peut être formée en mettant les deux couches 2, 12 en contact avant que celles-ci soient totalement polymérisées, une partie de chacune des deux couches étant encore sous forme liquide.

Il est à noter que dans le mode de réalisation des figures 1A, 1B, les deux couches 1, 11 peuvent également être liées entre elles chimiquement, par exemple par un mélange des matériaux formant les couches 1, 11 sur une faible épaisseur de part et d'autre de l'interface entre ces deux couches. Dans ce cas, les orifices 21 peuvent être omis.

Selon un autre mode de réalisation, les couches 2, 12 sont fabriquées séparément et assemblées l'une à l'autre par une couture, et/ou à l'aide d'une couche en un autre matériau apte à se lier aux deux couches 2, 12. Cet autre matériau peut comprendre par exemple de la colle, et/ou un tissu et/ou un film adhésif double face.

Dans l'exemple des figures 2A, 2B, la couche 12 comporte également des orifices 22, traversants ou non, ouverts du côté de la couche 2 et remplis par le matériau formant cette dernière. Les orifices 22 permettent d'augmenter la surface de contact entre les deux couches 2, 12 et ainsi d'augmenter leur cohésion.

Les figures 3A, 3B représentent une plaquette 30 en un matériau composite thermoformable et à mémoire de forme, selon un autre mode de réalisation. La plaquette 30 comprend une couche 3 dans le même matériau viscoélastique que la couche 1, et une couche 13 dans le même matériau thermoformable que la couche 11. La plaquette 30 diffère de la plaquette 20 en ce que la couche 13 est liée mécaniquement à la couche 3. A cet effet, la couche 13 comporte des orifices 23, traversants ou non, ayant chacun une ouverture du côté de la couche 3 plus étroite qu'une autre section droite de l'orifice, les orifices 23 étant remplis par le matériau formant la couche 3.

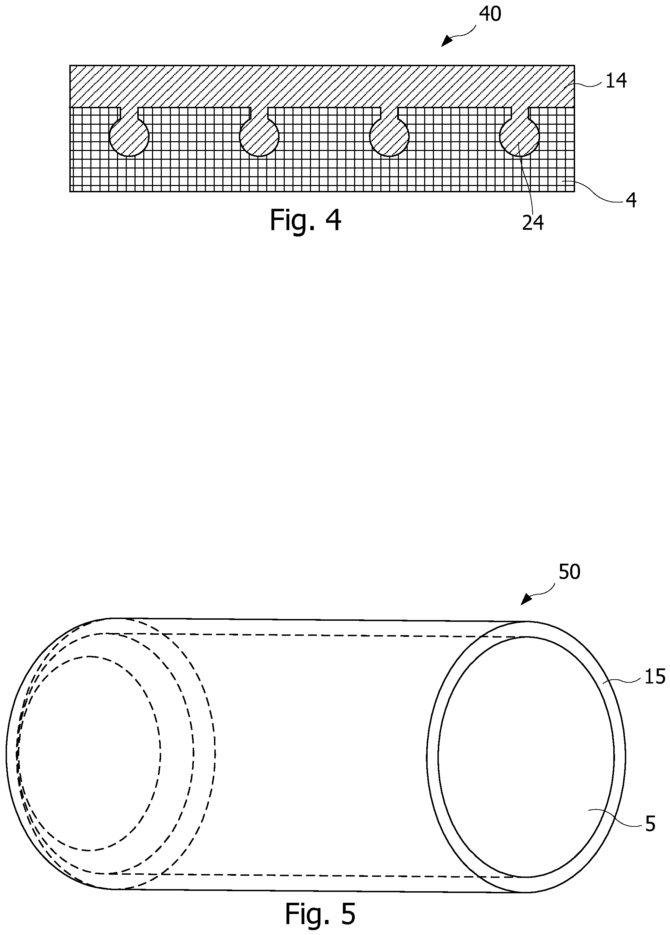

La figure 4 représentent une plaquette 40 en un matériau composite thermoformable et à mémoire de forme, selon un autre mode de réalisation. La plaquette 40 comprend une couche 4 dans le même matériau viscoélastique que la couche 1, et une couche 14 dans le même matériau thermoformable que la couche 11. La plaquette 40 diffère de la plaquette 30 en ce que la couche 14 est liée mécaniquement à la couche 4 par des plots 24 formés dans la couche 14 et pénétrant dans la couche 4, depuis la surface de contact de la couche 14 avec la couche 4. La couche 4 comporte des orifices traversants ou non, de forme complémentaire à celle des plots 24, formés en regard des plots 24. Chacun des plots peut avoir une base plus étroite qu'une autre section droite des plots, de manière à assurer une forte cohésion entre les couches 4, 14. Ainsi, les deux couches 4, 14 peuvent être fabriquées séparément, puis assemblées l'une à l'autre en exerçant une pression relativement forte pour enfoncer les plots 24 de la couche 14 dans les orifices en regard formés dans la couche 4. La couche 4 peut également être moulée sur la couche 14.

Dans les exemples représentés sur les figures 1A, 2A, 3A, 4, les formes d'assemblage 21, 22, 23, 24 présentent une section droite circulaire. Cette section peut présenter d'autres formes, y compris la forme de rainures, qui peuvent être adaptées à la force de cohésion recherchée entre les deux couches, cette force pouvant être liée aux efforts, notamment de torsion, que peut subir la plaquette.

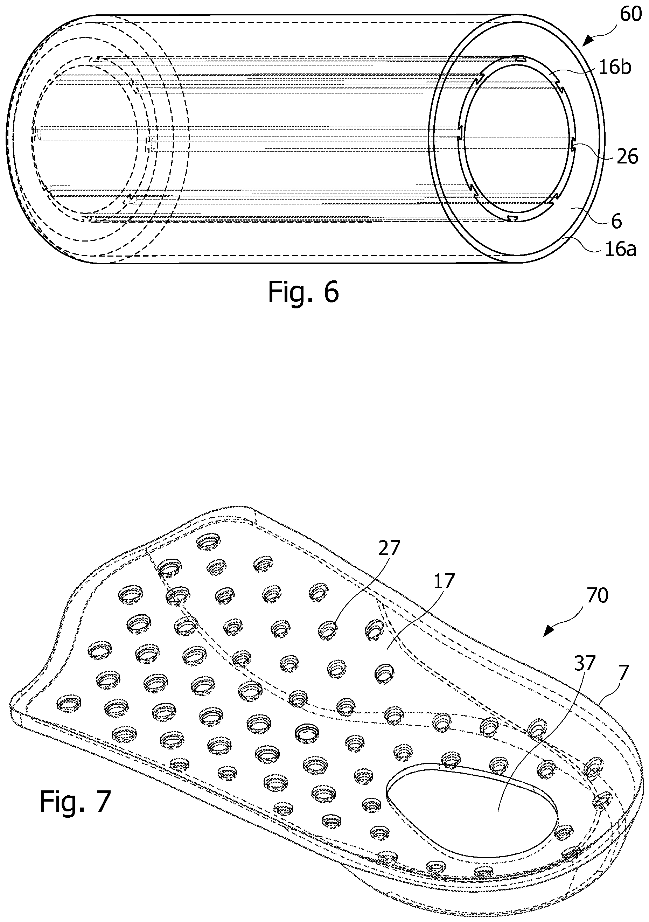

Les figures 5 et 6 représentent une partie d'un manche de forme cylindrique. Sur la figure 5, la partie de manche 50 comprend une couche viscoélastique 5 de forme cylindrique recouverte d'une couche thermoformable 15 de forme tubulaire renfermant la couche 5. La couche 5 peut être formée dans le même matériau que la couche 1 et la couche 15 peut être formée dans le même matériau que la couche 11. La couche 5 étant logée dans la couche 15, ces deux couches sont liées entre elles mécaniquement. S'il est nécessaire que la surface de contact entre les deux couches 5, 15 ne soit pas modifiée à la suite d'une opération de thermoformage de la couche thermoformable, le deux couches peuvent être liées entre elles chimiquement sur l'ensemble de la surface de contact, de l'une ou l'autre des manières décrites précédemment, avec ou sans l'utilisation d'un autre matériau tel qu'un film adhésif double face.

Ainsi, lorsque la partie de manche 50 est chauffée à une température située dans la plage de température de thermoformage, la couche 15 peut être déformée à la main en transmettant ses déformations à la couche 5. Si la partie de manche 50 est refroidie en maintenant sa déformation, cette dernière est conservée jusqu'à ce que la partie de manche soit à nouveau chauffée à une température de thermoformage et laissée sans contrainte mécanique pour permettre à la couche 5, déformée élastiquement, de reprendre sa forme initiale.

Sur la figure 6, la partie de manche 60 représentée est creuse. A cet effet, la couche viscoélastique 6 est tubulaire, avec des faces interne et externe ayant par exemple une section droite cylindrique. La face externe de la couche 6 est recouverte par une couche thermoformable externe 16a, de forme tubulaire, épousant la forme de la face externe de la couche 6. Une couche interne 16b de forme tubulaire est insérée dans la couche 6, la couche 16b étant conformée pour être en contact avec l'ensemble de la face interne de la couche 6. La couche interne 16b peut être thermoformable ou non, selon les applications envisagées.

Pour améliorer la liaison entre la couche 6 et la couche 16b, un profil d'assemblage peut être formé à l'interface entre ces deux couches. Dans l'exemple de la figure 6, ce profil d'assemblage comprend des rainures axiales formées dans la couche 16b, et réparties sur la face cylindrique de la couche 16b à l'interface avec la couche 6, les rainures coopèrent avec des nervures 26 de forme complémentaire formées dans la couche 16b. Dans l'exemple de la figure 6, les nervures 26 présentent une section droite en queue d'aronde. Grâce à sa forme tubulaire, la partie de manche 60 peut être insérée sur un manche, par exemple un manche de raquette, ou une poignée par exemple une poignée d'outil à main. Du fait qu'elle est thermoformable, la partie de manche 60 peut être conformée de manière à épouser la forme de la partie de la main d'un utilisateur en contact tenant la partie de manche.

Selon un autre mode de réalisation, les rainures sont formées dans la couche 6 et les nervures 26 sont formées dans la couche 16b.

Dans les modes de réalisation des figures 5 et 6, le manche ou la poignée peut être recouvert d'un revêtement qui peut être adapté à être en contact avec la main, par exemple en un matériau viscoélastique. Par ailleurs, dans le mode de réalisation de la figure 6, la couche 16a peut être omise, de sorte que la surface extérieure de la couche viscoélastique 6 soit en contact direct avec la main.

La figure 7 représente une semelle 70 comprenant une couche viscoélastique 7 dans le même matériau viscoélastique que la couche 1, et une couche thermoformable 17 dans le même matériau viscoélastique que la couche 11, les deux couches étant liées entre elles mécaniquement ou chimiquement selon l'un et/ou l'autre des divers modes de réalisation décrits précédemment. Dans l'exemple de la figure 7, le mode d'assemblage des couches 7 et 17 correspond à celui décrit en référence aux figures 3A 3B, avec des orifices 27 répartis dans la couche 17 (disposée du côté de la face supérieure de la semelle montrée sur la figure 7), chacun des orifices 27 ayant un profil dans un plan axial (par rapport à l'orifice) formant une contredépouille. La couche 17 comprend également une ouverture 37 englobant une zone d'appui du talon, de sorte que dans cette zone où la pression exercée par le pied peut être maximale, la semelle présente 70 une dureté moindre correspondant uniquement à la dureté de la couche viscoélastique 7 qui est moins élevée que celle de la couche 17.

Selon d'autres modes de réalisation, les couches 7 et 17 sont fabriquées séparément, et liées ensemble par une liaison chimique et/ou mécanique. Selon les applications, la couche 7 ou 17 peut être disposée de manière à venir en contact avec la plante du pied.

Selon un autre mode de réalisation, la couche 17 s'étend du talon jusqu'à l'extrémité des orteils.

Durant une opération de thermoformage de la semelle 70 à une température de thermoformage, celle-ci est plaquée contre la plante de pied de l'utilisateur et maintenue dans cette position jusqu'à ce que la température de la semelle atteigne à nouveau la plage de températures d'utilisation.

La présence de la couche viscoélastique 1-7 dans le dispositif offre avantageusement des fonctions d'amortissement de chocs et de répartition de charge. A cet effet, la couche viscoélastique peut présenter dans les plages de températures d'utilisation et de thermoformage, une dureté Shore A comprise entre 1 et 30, par exemple comprise entre 4 et 20, une résistance à l'élongation comprise entre 1,5 et 5 MPa. Dans l'application à une semelle, la couche viscoélastique 7 présente une dureté Shore A de 15 à 20, par exemple de 16.

Selon divers modes de réalisation, la couche viscoélastique 1-7 peut être réalisée en SEBS (Styrène Ethylène Butylène Styrène) basse dureté, ayant une température de transition vitreuse d'environ 120°C, ou bien en silicone ou gel de silicone PDMS (PolyDimethylSiloxane), ayant une température de transition vitreuse d'environ 220°C. La couche viscoélastique 1-7 peut également être réalisée en une mousse de PU (Polyuréthane), ou de EVA (Ethylene-vinyl acetate) ou encore de PE (polyéthylène).

Selon divers modes de réalisation, la couche thermoformable 11-16a, 16b, 17 peut être réalisée dans l'un des matériaux suivants :
- en PCL (polycaprolactone) ayant une température de transition vitreuse d'environ 50°C,
- en PLA (polyester de type polylactide) ayant une température de transition vitreuse d'environ 60°C,
- en PETG (polyéthylène téréphtalate glycolisé) ayant une température de transition vitreuse d'environ 80°C,
- en EVA ayant une température de transition vitreuse d'environ 85°C,
- en PU ou PE ayant une température de transition vitreuse inférieure à 100°C,
- ou encore en une résine thermoformable ayant une température de transition vitreuse inférieure à 100°C.

Selon divers modes de réalisation, les couches 11-16a, 16b, 17 peuvent présenter une épaisseur comprise entre 0,5 et 3 mm, et/ou une rigidité (ou module de Young) comprise entre 1 et 2 GPa.

Selon divers modes de réalisation, la fabrication du dispositif (plaquette 10, 20, 30, 40, manche 50, 60, semelle 70) peut comprendre les étapes suivantes. La couche thermoformable 11-17 est fabriquée par moulage (par injection, coulée, extrusion, ...) ou fabrication additive (impression 3D). La couche 11-17 ainsi obtenue est placée dans un moule à la forme souhaitée de la couche viscoélastique 1-7, où la couche viscoélastique est moulée (par coulée, injection, ...) pour former la couche viscoélastique 1-7 en remplissant le moule avec matériau viscoélastique sous forme liquide. Dans le cas du manche 50, la couche thermoformable 15 constitue le moule pour former la couche viscoélastique 5. Dans le cas du manche 60, les couches 16a, 16b préalablement maintenues dans leur agencement final, forment le moule utilisé pour réaliser la couche viscoélastique 6.

Selon un autre mode de réalisation, la couche viscoélastique 1-7 et la couche thermoformable 11-15, 17, ou les couches thermoformables 16a, 16b, sont fabriquées séparément par moulage (par coulée, injection, extrusion, ...) ou fabrication additive, puis assemblées par collage ou au moyen de liaisons mécaniques telles que des formes complémentaires en contredépouille en exploitant la capacité de la couche viscoélastique à se déformer élastiquement (figure 4).

Il apparaîtra clairement à l'homme de l'art que la présente invention est susceptible de diverses variantes de réalisation et diverses applications. En particulier, l'invention n'est pas limitée à un objet destiné à être appliqué sur une zone d'un corps humain ou animal, mais peut être utilisée pour toute application nécessitant un matériau viscoélastique thermoformable et à mémoire de forme ayant les propriétés indiquées précédemment.

Par ailleurs, plusieurs des modes de liaison des couches thermoplastique et viscoélastique peuvent être combinés. Ainsi, la couche thermoformable peut être liée à la couche viscoélastique à la fois par un mode de liaison chimique et un mode de liaison mécanique. Les orifices ou plots réalisés dans la couche thermoformable ne sont pas nécessairement tous de la même forme et des mêmes dimensions. En outre, la couche thermoformable peut présenter à la fois des orifices et des plots, qui coopèrent chacun avec une forme complémentaire réalisée dans la couche viscoélastique.

## Revendications

1. Procédé de fabrication d'un dispositif thermoformable à mémoire de forme destiné à être appliqué sur le corps humain et à être utilisé dans une plage de températures d'utilisation, procédé comprenant des étapes consistant à :
former une première couche (11-15, 16a, 16b, 17) en un matériau thermoformable déformable non élastiquement dans une plage de températures de thermoformage supérieure à la plage de températures d'utilisation et comprise entre 50 et 100 °C,
former une seconde couche (1-7) en un matériau viscoélastique déformable élastiquement dans une plage de températures incluant la plage de températures de thermoformage et la plage de températures d'utilisation, le matériau thermoformable étant, dans la plage de températures d'utilisation, déformable élastiquement et plus rigide que le matériau viscoélastique, le matériau thermoformable étant moins rigide que le matériau viscoélastique dans la plage de températures de thermoformage, et
assembler la première couche à la seconde couche par une surface de contact entre la première couche et la seconde couche, par une liaison chimique ou des liaisons mécaniques (21-24, 24,27) réparties sur la surface de contact,
et dans lequel :
- la première couche, qui est plus rigide que le matériau viscoélastique dans la plage de températures d'utilisation, définit la forme d'utilisation du dispositif dans la plage de températures d'utilisation, et
- la seconde couche définit une forme d'origine du dispositif et assure une fonction de mémoire de forme du dispositif dans la plage de températures de thermoformage.

2. Procédé selon la revendication 1, dans lequel :
la première couche (12-15, 16a, 16b, 17) et la seconde couche (2-7) sont fabriquées séparément par moulage ou impression 3D, puis assemblées ensemble, ou
la première couche (11-15, 16a, 16b, 17) est fabriquée par moulage ou impression 3D, puis disposée dans un moule de fabrication de la seconde couche (1-7), la seconde couche étant formée par moulage à l'aide du moule incluant la première couche, ou
la première couche (2-15, 16a, 16b) est fabriquée par moulage ou impression 3D, et forme un moule pour la fabrication par moulage de la seconde couche (2-6).

3. Procédé selon la revendication 1 ou 2, comprenant des étapes consistant à :
porter le dispositif à une température située dans la plage de températures de thermoformage, de manière à laisser le dispositif reprendre la forme d'origine définie par la seconde couche (1-7), par transfert de la forme d'origine de la seconde couche à la première couche (11-15, 16a, 16b, 17) par la surface de contact, et
porter le dispositif à une température située dans la plage de températures d'utilisation dans laquelle le dispositif est déformable élastiquement.

4. Procédé selon l'une des revendications 1 à 3, comprenant des étapes consistant à :
porter le dispositif à une première température située dans la plage de températures de thermoformage, et appliquer une déformation au dispositif à la première température, de manière à le placer dans une forme distincte de la forme d'origine, et
porter le dispositif à une seconde température située dans la plage de températures d'utilisation en maintenant la déformation, le dispositif à la seconde température étant déformable élastiquement depuis la forme distincte de la forme d'origine.

5. Dispositif destiné à être appliqué sur le corps humain et à être utilisé dans une plage de températures d'utilisation, dispositif comprenant:
une première couche (11-15, 16a, 16b, 17) en un matériau thermoformable, déformable non élastiquement dans une plage de températures de thermoformage supérieure à une plage de températures d'utilisation du dispositif et comprise entre 50 et 100 °C,
une seconde couche (1-7) en un matériau viscoélastique déformable élastiquement dans une plage de températures incluant la plage de températures d'utilisation du dispositif et la plage de températures de thermoformage, et
dans lequel :
la première couche est liée à la seconde couche par une liaison chimique ou des liaisons mécaniques (21-24, 24,27) réparties sur une surface de contact entre la première couche et la seconde couche,
le matériau thermoformable est déformable élastiquement et plus rigide que le matériau viscoélastique dans la plage de températures d'utilisation,
le matériau thermoformable est moins rigide que le matériau viscoélastique dans la plage de températures de thermoformage,
la première couche définit une forme d'utilisation du dispositif dans la plage de températures d'utilisation, et
la seconde couche définit une forme d'origine du dispositif et réalise une fonction de mémoire de forme du dispositif dans la plage de températures de thermoformage.

6. Dispositif selon la revendication 5, dans lequel la première couche (11-15, 16a, 16b, 17) est liée à la seconde couche (1-7) :
par une liaison chimique réalisée par un mélange des matériaux formant les première et seconde couches, de part et d'autre de la surface de contact entre les première et seconde couches, et/ou
par une couche de colle ou un film adhésif double face, apte à se lier chimiquement aux première et seconde couches, ou
par une liaison mécanique basée sur un profil d'assemblage (21-24, 26-27) réparti sur la surface de contact, et/ou
par une couture.

7. Dispositif selon la revendication 5 ou 6, dans lequel la première couche est noyée (11) dans la seconde couche (1), et/ou
la première couche (14) comprend des plots (24) pénétrant dans des orifices de forme complémentaire formés dans la seconde couche (4), et/ou
la seconde couche (2, 3, 7) comprend des plots (22, 23, 27) pénétrant dans des orifices de forme complémentaire formés dans la première couche (12, 13, 17).

8. Dispositif selon l'une des revendications 5 à 7, dans lequel la première couche (11-15, 16a, 16b, 17) :
est réalisée en PCL, en PETG, en EVA, en PE, en PU ou en PLA, ou encore en une résine thermoformable ayant une température de transition vitreuse inférieure à 100°C, et/ou
présente une rigidité comprise entre 1 et 2 GPa.

9. Dispositif selon l'une des revendications 5 à 8, dans lequel la seconde couche (1-7) présente au moins l'une des caractéristiques suivantes :
est réalisée en SEBS, ou en silicone, ou en gel de silicone, ou en une mousse de PU, de EVA ou de PE,
présente une dureté Shore A comprise entre 1 et 30.

10. Dispositif selon l'une des revendications 5 à 9, dans lequel la seconde couche (7) présente la forme d'une semelle conformée pour couvrir le talon et la plante du pied, et la première couche (17) est destiné à s'étendre du talon à la base des têtes métatarsiennes.

11. Dispositif selon l'une des revendications 5 à 9, dans lequel les première et seconde couches (15, 16, 5, 6) forment un manche ou une poignée, destiné à être tenu par la main.

12. Dispositif selon la revendication 11, dans lequel :
la seconde couche (5) présente une forme cylindrique, et la première couche (15) présente une forme tubulaire couvrant la seconde couche, ou
la seconde couche (6) présente une forme tubulaire et la première couche comprend une partie interne de forme tubulaire (16b) couvrant une face interne de la première couche et une partie externe de forme tubulaire (16a) couvrant une face externe de la seconde couche, ou
la seconde couche (6) présente une forme tubulaire et la première couche comprend une partie interne de forme tubulaire (16b) couvrant une face interne de la première couche, la seconde couche étant prévue pour être en contact avec la main.

## Patentansprüche

1. Verfahren zum Herstellen einer thermoformbaren Vorrichtung mit Formgedächtnis, die zum Aufbringen auf den menschlichen Körper und zum Verwenden in einem Gebrauchstemperaturbereich bestimmt ist, das Verfahren umfassend die Schritte, bestehend aus:
Ausbilden einer ersten Schicht (11-15, 16a, 16b, 17) aus einem thermoformbaren Material, das in einem Thermoformungstemperaturbereich, der höher als der Gebrauchstemperaturbereich ist und zwischen 50 und 100 °C liegt, nicht elastisch verformbar ist,
Ausbilden einer zweiten Schicht (1-7) aus einem viskoelastischen Material, das in einem Temperaturbereich, der den Thermoformungstemperaturbereich und den Gebrauchstemperaturbereich einschließt, elastisch verformbar ist, wobei das thermoformbare Material in dem Gebrauchstemperaturbereich elastisch verformbar und steifer als das viskoelastische Material ist, wobei das thermoformbare Material in dem Thermoformungstemperaturbereich weniger steif als das viskoelastische Material ist und
Zusammenfügen der ersten Schicht und der zweiten Schicht durch eine Kontaktoberfläche zwischen der ersten Schicht und der zweiten Schicht durch eine chemische Bindung oder mechanische Bindungen (21-24, 24, 27), die über die Kontaktoberfläche verteilt sind,
und wobei:
- die erste Schicht, die in dem Gebrauchstemperaturbereich steifer als das viskoelastische Material ist, die Gebrauchsform der Vorrichtung in dem Gebrauchstemperaturbereich definiert und
- die zweite Schicht eine ursprüngliche Form der Vorrichtung definiert und eine Formgedächtnisfunktion der Vorrichtung in dem Thermoformungstemperaturbereich sicherstellt.

2. Verfahren nach Anspruch 1, wobei:
die erste Schicht (12-15, 16a, 16b, 17) und die zweite Schicht (2-7) durch Gießen oder 3D-Drucken separat hergestellt und dann zusammengefügt werden oder
die erste Schicht (11-15, 16a, 16b, 17) durch Gießen oder 3D-Drucken hergestellt und dann in einer Gussform zur Herstellung der zweiten Schicht (1-7) angeordnet wird, wobei die zweite Schicht durch Gießen mit Hilfe der die erste Schicht einschließenden Gussform ausgebildet wird oder
die erste Schicht (2-15, 16a, 16b) durch Gießen oder 3D-Drucken hergestellt wird und eine Gussform für die Herstellung der zweiten Schicht (2-6) durch Gießen ausbildet.

3. Verfahren nach Anspruch 1 oder 2, umfassend die Schritte, bestehend aus:
Bringen der Vorrichtung auf eine Temperatur, die in dem Thermoformungstemperaturbereich liegt, sodass die Vorrichtung die ursprüngliche Form, die durch die zweite Schicht (1-7) definiert ist, durch Übertragung der ursprünglichen Form von der zweiten Schicht auf die erste Schicht (11-15, 16a, 16b, 17) durch die Kontaktoberfläche einnehmen kann und
Bringen der Vorrichtung auf eine Temperatur, die in dem Gebrauchstemperaturbereich liegt, in dem die Vorrichtung elastisch verformbar ist.

4. Verfahren nach einem der Ansprüche 1 bis 3, umfassend die Schritte, bestehend aus:
Bringen der Vorrichtung auf eine erste Temperatur, die in dem Thermoformungstemperaturbereich liegt, und Aufbringen einer Verformung auf die Vorrichtung bei der ersten Temperatur, sodass sie in eine Form gebracht wird, die sich von der ursprünglichen Form unterscheidet, und
Bringen der Vorrichtung auf eine zweite Temperatur, die in dem Gebrauchstemperaturbereich liegt, bei Beibehalten der Verformung, wobei die Vorrichtung bei der zweiten Temperatur von der ursprünglichen Form, die sich von der ursprünglichen Form unterscheidet, elastisch verformbar ist.

5. Vorrichtung, die zum Aufbringen auf den menschlichen Körper und zum Verwenden in einem Gebrauchstemperaturbereich bestimmt ist, die Vorrichtung umfassend:
eine erste Schicht (11-15, 16a, 16b, 17) aus einem thermoformbaren Material, das in einem Thermoformungstemperaturbereich, der höher als eine Gebrauchstemperaturbereich der Vorrichtung ist und zwischen 50 und 100 °C liegt, nicht elastisch verformbar ist,
eine zweite Schicht (1-7) aus einem viskoelastischen Material, das in einem Temperaturbereich, der den Gebrauchstemperaturbereich der Vorrichtung und den Thermoformungstemperaturbereich einschließt, elastisch verformbar ist, und
wobei:
die erste Schicht mit der zweiten Schicht durch eine chemische Bindung oder mechanische Bindungen (21-24, 24, 27) verbunden ist, die über eine Kontaktoberfläche zwischen der ersten Schicht und der zweiten Schicht verteilt sind,
das thermoformbare Material elastisch verformbar und in dem Gebrauchstemperaturbereich steifer als das viskoelastische Material ist,
das thermoformbare Material in dem Thermoformungstemperaturbereich weniger steif als das viskoelastische Material ist,
die erste Schicht eine Gebrauchsform der Vorrichtung in dem Gebrauchstemperaturbereich definiert und
die zweite Schicht eine ursprüngliche Form der Vorrichtung definiert und eine Formgedächtnisfunktion der Vorrichtung in dem Thermoformungstemperaturbereich herstellt.

6. Vorrichtung nach Anspruch 5, wobei die erste Schicht (11-15, 16a, 16b, 17) mit der zweiten Schicht (1-7) verbunden ist:
durch eine chemische Bindung, die durch eine Mischung der Materialien, die die erste und die zweite Schicht ausbilden, auf beiden Seiten der Kontaktoberfläche zwischen der ersten und der zweiten Schicht hergestellt wird, und/oder
durch eine Klebstoffschicht oder einen doppelseitigen Klebefilm, der geeignet ist, sich chemisch an die erste und die zweite Schicht zu binden, oder
durch eine mechanische Bindung, die auf einem über die Kontaktoberfläche verteilten Profil (21-24, 26-27) zum Zusammenfügen basiert, und/oder
durch eine Naht.

7. Vorrichtung nach Anspruch 5 oder 6, wobei die erste Schicht in die zweite Schicht (1) eingebettet (11) ist und/oder
die erste Schicht (14) Stifte (24) umfasst, die in Öffnungen mit komplementärer Form eindringen, die in der zweiten Schicht (4) ausgebildet sind, und/oder
die zweite Schicht (2, 3, 7) Stifte (22, 23, 27) umfasst, die in Öffnungen mit komplementärer Form eindringen, die in der ersten Schicht (12, 13, 17) ausgebildet sind.

8. Vorrichtung nach einem der Ansprüche 5 bis 7, wobei die erste Schicht (11-15, 16a, 16b, 17):
aus PCL, aus PETG, aus EVA, aus PE, aus PU oder aus PLA oder aus einem thermoformbaren Harz, das eine Glasübergangstemperatur von weniger als 100 °C besitzt, hergestellt ist und/oder
eine Steifigkeit zwischen 1 und 2 GPa vorweist.

9. Vorrichtung nach einem der Ansprüche 5 bis 8, wobei die zweite Schicht (1-7) mindestens eines der folgenden Merkmale vorweist:
aus SEBS oder aus Silikon oder aus Silikongel oder aus einem PU-, EVA- oder PE-Schaum hergestellt ist,
eine Shore-A-Härte zwischen 1 und 30 vorweist.

10. Vorrichtung nach einem der Ansprüche 5 bis 9, wobei die zweite Schicht (7) die Form einer Sohle aufweist, die angepasst ist, um die Ferse und die Fußsohle zu bedecken, und die erste Schicht (17) bestimmt ist, sich von der Ferse bis zu der Basis der Metatarsalköpfchen zu erstrecken.

11. Vorrichtung nach einem der Ansprüche 5 bis 9, wobei die erste und die zweite Schicht (15, 16, 5, 6) einen Stiel oder einen Griff ausbilden, der bestimmt ist, von der Hand gehalten zu werden.

12. Vorrichtung nach Anspruch 11, wobei:
die zweite Schicht (5) eine zylindrische Form vorweist und die erste Schicht (15) eine röhrenförmige Form vorweist, die die zweite Schicht bedeckt, oder
die zweite Schicht (6) eine röhrenförmige Form vorweist und die erste Schicht einen Innenteil (16b) mit röhrenförmiger Form, der eine Innenseite der ersten Schicht bedeckt, und einen Außenteil (16a) mit röhrenförmiger Form umfasst, der eine Außenseite der zweiten Schicht bedeckt, oder
die zweite Schicht (6) eine röhrenförmige Form vorweist und die erste Schicht einen Innenteil (16b) mit röhrenförmiger Form umfasst, der eine Innenseite der ersten Schicht bedeckt, wobei die zweite Schicht vorgesehen ist, um mit der Hand in Kontakt zu sein.

## Claims

1. A method of manufacturing a thermoformable shape-memory device, to be applied on the human body and to be used in a use temperature range, method comprising the steps of:
forming a first layer (11-15, 16a, 16b, 17) of a thermoformable material that is inelastically deformable in a range of thermoforming temperatures higher than the use temperature range and comprised between 50 and 100°C,
forming a second layer (1-7) of a viscoelastic material that is elastically deformable in a temperature range including the thermoforming temperature range and the use temperature range, wherein the thermoformable material is, in the use temperature range, elastically deformable and rigid than the viscoelastic material, the thermoformable material being less rigid than the viscoelastic material in the thermoforming temperature range , and
joining the first layer to the second layer over a contact surface between the first layer and the second layer, by chemical bonding or mechanical bonds (21-24, 24, 27) distributed over the contact surface,
wherein
- the first layer which is more rigid than the viscoelastic material in the use temperature range, defines the shape of use of the device in the use temperature range, and
- the second layer defines an original shape of the device and provides a shape-memory function of the device in the thermoforming temperature range.

2. The method according to claim 1, wherein:
the first layer (12-15, 16a, 16b, 17) and the second layer (2-7) are manufactured separately by molding or 3D printing and then assembled together, or
the first layer (11-15, 16a, 16b, 17) is manufactured by molding or 3D printing and then placed in a mold for manufacturing the second layer (1-7), the second layer being formed by molding using the mold including the first layer, or
the first layer (2-15, 16a, 16b) is manufactured by molding or 3D printing, and forms a mold for the manufacture by molding of the second layer (2-6).

3. The method according to claim 1 or 2, comprising the steps of:
heating the device to a temperature within the thermoforming temperature range so that the device returns to the original shape defined by the second layer (1-7) by transferring the original shape of the second layer to the first layer (11-15, 16a, 16b, 17) through the contact surface, and
bringing the device to a temperature within the use temperature range in which the device is elastically deformable.

4. The method according to claim 1 to 3, comprising the steps of:
heating the device to a first temperature within the thermoforming temperature range, and applying a deformation to the device at the first temperature to conform the device to a shape distinct from the original shape, and
bringing the device to a second temperature within the use temperature range while maintaining the deformation, the device at the second temperature being elastically deformable with respect to the shape distinct from the original shape.

5. A device to be applied on the human body and to be used in a use temperature range, device comprising:
a first layer (11-15, 16a, 16b, 17) of a thermoformable material that is inelastically deformable in a thermoforming temperature range higher than a use temperature range and comprised between 50 and 100°C,
a second layer (1-7) of a viscoelastic material that is elastically deformable in a temperature range including the use temperature range of the device and the thermoforming temperature range, and
wherein:
the first layer is bonded to the second layer by a chemical bond or mechanical bonds (21-24, 24, 27) distributed over a contact surface between the first layer and the second layer,
the thermoformable material is elastically deformable and more rigid than the viscoelastic material in the use temperature range,
the thermoformable material is less rigid than the viscoelastic material in the thermoforming temperature range,
the first layer defines a form of use of the device in the use temperature range, and
the second layer defines an original shape of the device and achieves a shape-memory function of the device in the thermoforming temperature range.

6. The device according to claim 5, wherein the first layer (11-15, 16a, 16b, 17) is bonded to the second layer (1-7) :
by a chemical bond made by a fusion of the materials forming the first and second layers, on either side of the contact surface between the first and second layers and/or,
by a layer of glue or a double-sided adhesive film, capable of chemically bonding to the first and second layers,
by a mechanical connection based on a joining profile (21-24, 26-27) distributed over the contact surface, and/or
a seam.

7. The device according to claim 5 or 6, wherein the first layer is embedded (11) in the second layer (1), and/or
the first layer (14) comprises studs (24) penetrating matching shaped holes in the second layer (4), and/or
the second layer (2, 3, 7) comprises studs (22, 23, 27) penetrating matching shaped holes in the first layer (12, 13, 17).

8. The device according to claim 5 to 7, wherein the first layer (11-15, 16a, 16b, 17):
is PCL, PETG, EVA, PE, PU or PLA, or a thermoformable resin with a glass transition temperature below 100°C, and/or
has a stiffness between 1 and 2 GPa.

9. The device according to claim 5 to 8, wherein the second layer (1-7) has at least one of the following features:
is SEBS, or silicone, or silicone gel, or PU, EVA or PE foam,
has a Shore A hardness between 1 and 30.

10. The device according to claim 5 to 9, wherein the second layer (7) has the shape of an insole configured to cover the heel and the sole of a foot, and the first layer (17) extends from the heel to the base of the metatarsal heads.

11. The device according to claim 5 to 9, wherein the first and second layers (15, 16, 5, 6) form a handle or a grip, intended to be held by a hand.

12. The device according to claim 11, wherein:
the second layer (5) has a cylindrical shape, and the first layer (15) has a tubular shape covering the second layer, or
the second layer (6) has a tubular shape, and the first layer comprises a tubular-shaped inner portion (16b) covering an inner surface of the first layer, and a tubular-shaped outer portion (16a) covering an outer surface of the second layer, or
the second layer (6) has a tubular shape, and the first layer comprises a tubular-shaped inner portion (16b) covering an inner surface of the first layer, the second layer being intended to be in contact with the hand.
